(19) Europäisches Patentamt
European Patent Office
Office européen des brevets

(11) **EP 2 589 926 B1**

(12) **EUROPÄISCHE PATENTSCHRIFT**

(45) Veröffentlichungstag und Bekanntmachung des Hinweises auf die Patenterteilung:
**28.07.2021 Patentblatt 2021/30**

(51) Int Cl.:
***G01B 11/25*** *(2006.01)*

(21) Anmeldenummer: **12007413.3**

(22) Anmeldetag: **29.10.2012**

(54) **Vorrichtung und Verfahren zur optischen Formerfassung von bewegten Gegenständen**

Device for and method of optically measuring the shape of moving objects

Dispositif et procédé de mesure optique de la forme d'un objet mobile

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.11.2011 DE 102011117894**

(43) Veröffentlichungstag der Anmeldung:
**08.05.2013 Patentblatt 2013/19**

(73) Patentinhaber: **SAC Sirius Advanced Cybernetics GmbH**
**76227 Karlsruhe (DE)**

(72) Erfinder:
• **Wied, Bernd**
**76131 Karlsruhe (DE)**

• **Wagner, Christoph**
**75203 Königsbach-Stein (DE)**

(74) Vertreter: **Kordel, Mattias et al**
**Gleiss Große Schrell und Partner mbB**
**Patentanwälte Rechtsanwälte**
**Leitzstrasse 45**
**70469 Stuttgart (DE)**

(56) Entgegenhaltungen:
**DE-A1- 4 402 414     DE-A1- 19 739 250**

• **None**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine Vorrichtung zur optischen Formerfassung eines bewegten Gegenstands gemäß Oberbegriff des Anspruchs 7 sowie ein Verfahren zur optischen Formerfassung eines bewegten Gegenstands gemäß Oberbegriff des Anspruchs 1. Vorrichtungen und Verfahren zur optischen Formerfassung bewegter Gegenstände sind bekannt. Es gibt eine Vielzahl von Messprinzipien, mit denen auf optischem Weg die dreidimensionale Form von Gegenständen erfasst werden kann. Zu nennen sind die Prinzipien der

- Triangulation:

    Laserlichtschnittverfahren
    Streifenprojektion
    Stereoverfahren
    Photogrammetrie
    Photometrisches Stereo
    Photometrische Deflektometrie

- Interferometrische Verfahren:

    Laserinterferometrie
    Weißlichtinterferometrie
    Holografische Verfahren

- Laufzeitverfahren:

    Hochfrequente Modulation der Lichtquelle

Optische 3D-Verfahren benötigen von Natur aus mehrere Kameraaufnahmen. Dies liegt daran, dass für jeden Punkt des zu vermessenden Gegenstandes in der Regel drei unbekannte Parameter zu bestimmen sind:

- Der Ort des Gegenstandspunktes, im Folgenden als Form bezeichnet

- Die lokale Reflektivität des Gegenstandes, die im Folgenden als Textur bezeichnet wird (Schwarz/Weiß)

- Die lokale Helligkeit des Umgebungslichtes an jedem Punkt (Die Anzahl reduziert sich auf 2 Unbekannte, sofern sämtliches Umgebungslicht abgeschattet werden kann)

Zur Bestimmung von 3 unbekannten Parametern sind mindestens 3 Gleichungen mit 3 gegebenen Parametern notwendig. Die gegebenen Parameter sind mindestens 3 Kamerabilder mit der lokalen Helligkeit des Gegenstandes. Die Mindestanzahl reduziert sich auf 2, falls das Umgebungslicht abgeschattet werden kann.

Bei den meisten dieser Verfahren können die erforderlichen Kamerabilder nicht gleichzeitig aufgenommen werden, sondern müssen nacheinander aufgenommen werden (Zeitmultiplex). Dies führt dazu, dass sich ein bewegter Gegenstand von einer Bildaufnahme zur nächsten bereits weiterbewegt hat. Die Bilder des Gegenstandes sind dann nicht deckungsgleich, die Voraussetzungen für die Berechnung der Form sind nicht gegeben.

Dies gilt insbesondere für eine rotative Bewegung bei rotationssymmetrischen Gegenständen. Beispiel hierfür sind gedrehte oder rundgeschliffene Metallbauteile, die in Stückzahlen bis hin zu mehreren Millionen pro Jahr und Bauteiltyp gefertigt werden und auf feinste Defekte an der Oberfläche zu prüfen sind.

Ebenso gilt dies für eine lineare Bewegung von Gegenständen. Eine lineare Bewegung bietet sich an bei stangenförmigen Gegenständen wie Profilmaterial, Bandmaterial, Bauteilen mit ebenen Oberflächen und vielen mehr. Ein Beispiel hierfür sind insbesondere gestanzte, geprägte und/oder umgeformte Bauteile, die am Streifen oder als Einzelteile gefertigt werden.

Es gibt Ansätze, auch bei optischen 3D-Verfahren alle notwendige Information mit einem einzigen Kamerabild zu gewinnen. Ein solches Verfahren ist das des räumlichen Phasenschiebens. Es ist in seiner Anwendung beschränkt auf die Interferometrie und die Streifenprojektion. Hierbei werden die drei Unbekannten aus drei benachbarten Bildpunkten ermittelt. Leider sind diese Verfahren nicht anwendbar für das photometrische Stereoverfahren und die photometrische Deflektometrie (beschrieben in WO 2004/051186 A1 und DE 10 2005 013 614 A1) sowie Laufzeitverfahren. Zudem ist die Qualität der Formerfassung beim räumlichen Phasenschieben stark eingeschränkt.

Aus der DE 197 39 250 A1 ist eine optische Formerfassung mittels Stereoverfahren bekannt.

Problematisch an bekannten Lösungen ist insbesondere, dass Vorrichtungen und Verfahren zur optischen Formerfassung bewegter Gegenstände in Umgebungen implementiert werden, in denen eine Kontrolle der Bewegung durch externe, also von der optischen Formerfassung unabhängige Parameter vorgegeben ist, wobei die Bewegung kaum oder gar nicht zu kontrollieren oder jedenfalls nicht auf die Erfordernisse der optischen Formerfassung abstimmbar ist. Die Wahl der Bewegungsgeschwindigkeit der Gegenstände einerseits und die optische Formerfassung andererseits liegen nicht in einer Hand. Meist ist es so, dass sich die optische Formerfassung an die durch die Bewegungsgeschwindigkeit vorgegebenen Umstände anpassen muss. Beispielsweise kann bei einer Fließbandfertigung die Geschwindigkeit des Fließbands aus fertigungstechnischen Gründen vorgegeben sein. Die Parameter der optischen Formerfassung müssen dann hieran angepasst werden. Problematisch ist dies insbesondere, wenn die Geschwindigkeit der zu erfassenden Gegenstände nicht konstant und/oder nicht genau bekannt ist.

Der Erfindung liegt daher die Aufgabe zugrunde, eine Vorrichtung und ein Verfahren zur optischen Formerfassung bewegter Gegenstände zu schaffen, welche die genannten Nachteile nicht aufweist.

Diese Aufgabe wird gelöst, indem eine Vorrichtung mit den Merkmalen des Anspruchs 7 geschaffen wird. Diese umfasst mindestens eine Beleuchtungseinrichtung, die so ausgebildet und/oder angeordnet ist, dass durch sie verschiedene Beleuchtungen des zu erfassenden Gegenstands bewirkbar sind. Es ist eine Aufnahmeeinrichtung vorgesehen, die so ausgebildet und angeordnet ist, dass Bilder von dem Gegenstand aufnehmbar sind. Die Vorrichtung zeichnet sich durch eine Steuerungseinrichtung aus, durch welche eine Bewegung des Gegenstands mithilfe einer Bewegungseinrichtung vorgebbar ist. Hierdurch wird die Bewegung des Gegenstands von der Vorrichtung zur optischen Formerfassung gesteuert beziehungsweise kontrolliert. Es ist also nicht mehr nötig, die optische Formerfassung der Gegenstandsbewegung anzupassen, sondern umgekehrt wird die Bewegung des Gegenstands den Bedingungen der optischen Formerfassung angepasst. Dies erhöht die Präzision und Qualität der Formerfassung. Es ist möglich, dass die Vorrichtung selbst die Bewegungseinrichtung umfasst, durch welche der Gegenstand bewegbar ist. Bei einem anderen Ausführungsbeispiel ist die Steuerungseinrichtung mit einer externen Bewegungseinrichtung verbindbar, beispielsweise durch eine Schnittstelle. Auch in diesem Fall erfolgt die Steuerung beziehungsweise Kontrolle der Bewegung des Gegenstands durch die Vorrichtung zur optischen Formerfassung.

Bevorzugt wird eine Vorrichtung, die sich dadurch auszeichnet, dass die Steuerungseinrichtung so ausgebildet ist, dass durch sie eine Bewegung, insbesondere eine Geschwindigkeit des Gegenstands steuer- und/oder regelbar ist. Insbesondere wenn die Geschwindigkeit des Gegenstands geregelt wird, ist eine sehr präzise Kontrolle derselben und damit eine Anpassung auf die Parameter der Vorrichtung zur optischen Formerfassung möglich.

Es wird auch eine Vorrichtung bevorzugt, die sich dadurch auszeichnet, dass die Vorrichtung selbst die Bewegungseinrichtung aufweist, wobei die Bewegungseinrichtung so ausgebildet ist, dass durch sie eine translatorische Bewegung und/oder eine Schwenk- beziehungsweise Drehbewegung des Gegenstands bewirkbar ist. Der Begriff Bewegung ist also nicht eingeschränkt auf eine bestimmte Bewegungsform zu verstehen, sondern umfasst sowohl Translation, Rotation als auch zusammengesetzte Bewegungsformen, die aus einer Überlagerung von Rotation und Translation resultieren. Dies kann beispielsweise eine schraubenförmige Bewegung des Gegenstands sein. In diesem Sinne ist auch der Begriff der Geschwindigkeit des Gegenstands nicht eingeschränkt auf eine translatorische Geschwindigkeit zu verstehen. Je nach Ausführungsbeispiel ist hier eine translatorische Geschwindigkeit oder eine Drehgeschwindigkeit angesprochen, oder es sind Geschwindigkeiten angesprochen, die aus vektorieller Addition verschiedener Geschwindigkeitskomponenten resultieren.

Besonders bevorzugt ist die Bewegungseinrichtung so ausgebildet, dass sie den Gegenstand mit konstanter Geschwindigkeit bewegt.

Es wird auch eine Vorrichtung bevorzugt, bei welcher die Bewegungseinrichtung so ausgebildet ist, dass sie den Gegenstand schrittweise bewegt.

Bevorzugt umfasst die Bewegungseinrichtung einen Schrittmotor, Linearmotor oder eine numerisch gesteuerte Bewegungseinrichtung (CNC-Einrichtung). Ist ein Schrittmotor vorgesehen, ist durch die Bewegungseinrichtung bevorzugt eine schrittweise Bewegung des Gegenstands bewirkbar. Der Gegenstand kann dann während einer Bildaufnahme ruhen und von Aufnahme zu Aufnahme schrittweise weiterbewegt werden. Es ist auch möglich, mehrere Aufnahmen unter verschiedenen Beleuchtungen beziehungsweise Beleuchtungssituationen an einer Position des Gegenstands durchzuführen und diesen danach um einen vorbestimmten Abstand, beispielsweise eine Schrittlänge eines Schrittmotors oder ein Vielfaches hiervon, zu verlagern, wobei daraufhin eine weitere Folge von Aufnahmen erfolgt.

Erfindungsgemäß umfasst die Aufnahmeeinrichtung eine Kamera, wobei die Kamera als Zeilenkamera ausgebildet ist. Diese umfasst bevorzugt eine Zeile. Bei einem anderen Ausführungsbeispiel umfasst die Zeilenkamera mehrere Zeilen.

Bevorzugt wird auch eine Vorrichtung, bei der die Aufnahmeeinrichtung eine Kamera umfasst, wobei die Kamera als Matrixkamera ausgebildet ist. Eine Matrixkamera ist aber nicht beansprucht.

Es wird auch eine Vorrichtung bevorzugt, bei welcher die Beleuchtungseinrichtung mindestens zwei Leuchten umfasst, die an verschiedenen Positionen so angeordnet sind, dass sie den Gegenstand aus verschiedenen Richtungen beleuchten. Um verschiedene Beleuchtungssituationen zu schaffen, sind die mindestens zwei Leuchten bevorzugt nacheinander aktivierbar.

Bevorzugt wird auch eine Vorrichtung, bei welcher die Beleuchtungseinrichtung eine Vorrichtung zur Streifenprojektion umfasst. Auch so ist es möglich, verschiedene Beleuchtungssituationen des Gegenstands zu verwirklichen.

Erfindungsgemäß wird das Verfahren nach dem Prinzip des photometrischen Stereo oder der photometrischen Deflektometrie durchgeführt. Bei einem Verfahren gemäß dem Prinzip des photometrischen Stereo oder der photometrischen Deflektometrie ist vorgesehen, dass die Vorrichtung nur eine Aufnahmeeinrichtung, besonderes bevorzugt genau eine Zeilenkamera, und eine Beleuchtungseinrichtung umfasst, durch welche verschiedene Beleuchtungssituationen, insbesondere mindestens drei verschiedene Beleuchtungssituationen, geschaffen werden können.

Bei einem Stereoverfahren, auch binokularem Stereoverfahren genannt, ist dagegen typischerweise nur eine Beleuchtungssituation, gegebenenfalls insbesondere eine Beleuchtung durch Umgebungslicht, vorgesehen, während mindestens zwei Aufnahmeeinrichtungen zur Aufnahme von Bildern des Gegenstands aus verschiedenen Richtungen vorgesehen sind. Bevorzugt wird auch eine Vorrichtung, mit welcher das photometrische Stereoverfahren und/oder die photometrische Deflektometrie mit dem binokularen Stereoverfahren kombinierbar sind. Eine solche Vorrichtung umfasst mehr als eine Aufnahmeeinrichtung und eine Beleuchtungseinrichtung, durch welche verschiedene Beleuchtungssituationen geschaffen werden können.

Bei einem bevorzugten Ausführungsbeispiel der Vorrichtung umfasst die Beleuchtungseinrichtung bevorzugt verschiedene Lichtquellen, die an verschiedenen Positionen angeordnet sind, um den Gegenstand aus verschiedenen Richtungen zu beleuchten. Die Zeilenkamera umfasst bevorzugt genau eine Zeile. Bei einem anderen Ausführungsbeispiel ist es möglich, dass die Zeilenkamera mehrere, insbesondere wenige Zeilen aufweist, wobei die Zahl der Zeilen bevorzugt sehr viel kleiner ist als die Zahl der Pixel innerhalb einer Zeile.

Ist die Kamera dagegen als Matrixkamera ausgebildet, was aber nicht beansprucht wird, ist ein lichtempfindlicher Chip derselben typischerweise so ausgebildet, dass die Zahl der Zeilen und die Zahl der Pixel innerhalb einer Zeile in einer ähnlichen Größenordnung liegen.

Schließlich wird auch eine Vorrichtung bevorzugt, bei welcher die Beleuchtungseinrichtung ein Interferometer umfasst.

Die Aufgabe wird auch gelöst, indem ein Verfahren zur optischen Formerfassung eines bewegten Gegenstandes gemäß Anspruch 1 geschaffen wird. Dieses umfasst die folgenden Schritte: Es wird eine Anzahl $i_{max}$ von Beleuchtungen beziehungsweise Beleuchtungssituationen ausgewählt. Eine erste Beleuchtungssituation wird aktiviert. Ein Gegenstand wird mit der aktivierten Beleuchtungssituation beleuchtet, und es wird ein Bild des Gegenstands unter der aktivierten Beleuchtungssituation aufgenommen. Die aktivierte Beleuchtungssituation wird deaktiviert, und es wird eine nächste Beleuchtungssituation aktiviert. Die Schritte des Beleuchtens, der Aufnahme eines Bildes und des Deaktivierens der aktiven beziehungsweise Aktivieren einer nächsten Beleuchtungssituation werden solange wiederholt, bis Bilder des Gegenstands unter allen $i_{max}$ Beleuchtungssituationen aufgenommen wurden. Das Verfahren zeichnet sich dadurch aus, dass der Gegenstand mithilfe einer Bewegungseinrichtung bewegt wird, und dass eine Steuerungseinrichtung der Vorrichtung zur optischen Formerfassung eine Bewegung des Gegenstands mithilfe der Bewegungseinrichtung vorgibt. Auf diese Weise realisieren sich die bereits in Zusammenhang mit der Vorrichtung erwähnten Vorteile, insbesondere obliegt die Kontrolle der Bewegung dem Verfahren zur optischen Formerfassung, sodass die Bewegung den Erfordernissen dieses Verfahrens angepasst wird.

Es wird ein Verfahren bevorzugt, bei dem eine translatorische und/oder eine Schwenk- beziehungsweise Drehbewegung des Gegenstands bewirkt wird.

Es wird auch ein Verfahren bevorzugt, bei dem eine Geschwindigkeit des Gegenstands konstant ist. Sie wird vorzugsweise so gewählt, dass ein Versatz des Gegenstands für nacheinander aufgenommenen Bildern einem objektseitigen Pixelabstand oder einer Pixelbreite einer Aufnahmeeinrichtung, die als Zeilenkamera ausgebildet ist, dividiert durch die Anzahl $i_{max}$ der Beleuchtungssituationen gleich ist. Es ist auch möglich, dass der Versatz diesem Abstand näherungsweise entspricht. Diese Vorgehensweise ermöglicht eine besonders einfache Rückverschiebung der Bilder in einer der Auswertung dienenden Recheneinheit. Es wird nämlich in diesem Fall nach Aktivierung aller Beleuchtungen genau eine Distanz des Gegenstands in der Bildebene der Aufnahmeeinrichtung erreicht, die einem bildseitigen Pixelabstand oder einer bildseitigen Pixelbreite entspricht.

Der Begriff "objektseitiger Pixelabstand" oder kurz auch nur "Pixelabstand" spricht hier und im Folgenden allerdings einen gemäß der Abbildungsoptik auf den Gegenstand projizierten Pixelabstand an. Für eine reale Bewegung des Gegenstands ist nämlich nicht der Pixelabstand in der Bildbene eines Chips der Aufnahmeeinrichtung relevant, sondern dessen Abbildung auf dem Gegenstand gemäß der gewählten Optik.

Der Begriff "Pixelabstand" spricht bevorzugt einen sogenannten Mittelabstand, also einen Abstand zweier Mittelpunkte benachbarter Pixel zueinander an.

Hier und im Folgenden ist vorzugsweise unter dem Pixelabstand insbesondere bei Verwendung einer Zeilenkamera auch eine Pixelbreite zu verstehen, die vorzugsweise senkrecht zur Längserstreckung einer Zeile und parallel zur Bewegungsrichtung des Gegenstands gemessen wird. Umfasst die Zeilenkamera mehrere Zeilen, entspricht dieser Abstand einem Abstand, bevorzugt einem Mittelabstand zweier benachbarter Pixel in benachbarten Zeilen. Die Pixel sind vorzugsweise quadratisch ausgebildet, sodass deren Breiten beziehungsweise Abstände in einer ersten Richtung und in einer hierzu senkrechten, zweiten Richtung gleich sind. Insofern entspricht die Länge eines Pixels innerhalb der Zeile beziehungsweise der Abstand zum Nachbarpixel gerade der Breite der Zeile und damit auch der Breite eines Pixels. Sind die Pixel dagegen rechteckig mit ungleichen Kantenlängen ausgebildet, ist mit dem Pixelabstand bevorzugt stets die Pixelbreite gemeint. Diese Ausführungen gelten - wie bereits beschrieben - bevorzugt auch in Hinblick auf die folgenden Erläuterungen, wo sie lediglich der Übersichtlichkeit der Darstellung wegen nicht nochmals wiederholt werden.

Es wird auch ein Verfahren bevorzugt, das sich dadurch auszeichnet, dass eine schrittweise Bewegung des Gegenstands bewirkt wird, wobei der Gegenstand zumindest während der Aufnahme eines Bildes stillsteht. insbesondere steht der Gegenstand vorzugsweise bei der Aufnahme der Bilder unter jeder Beleuchtungssituation still. Vorteilhaft dabei ist, dass sich der Gegenstand zum Zeitpunkt der Aufnahme nicht bewegt. Es wird bevorzugt, dass der Gegenstand nach jeder Aufnahme unter einer bestimmten Beleuchtungssituation einen Schritt weiter bewegt wird, bevor eine Aufnahme mit einer nächsten Beleuchtungssituation durchgeführt wird. Dabei wird die Schrittweite vorzugsweise so gewählt, dass sie einem Pixelabstand oder einer Pixelbreite einer vorzugsweise als Zeilenkamera ausgebildeten Aufnahmeeinrichtung dividiert durch die Anzahl $i_{max}$ der Beleuchtungssituationen gleich ist.

Im Rahmen des Verfahrens sind die wenigen Zeilen oder ist die genau eine Zeile der bevorzugt eingesetzten Zeilenkamera so orientiert, dass sie vorzugsweise senkrecht auf einer Bewegungsrichtung des Gegenstands steht/stehen. Die hier angesprochene Pixelbreite entspricht somit einer Breite der Pixel der Kamera, die in Richtung der Bewegung des Gegenstands, also senkrecht zur Abfolge der Pixel entlang einer Zeile gemessen ist.

Der Gegenstand bewegt sich im Laufe einer Folge aller $i_{max}$ Beleuchtungen vorzugsweise genau um die Breite einer Zeile weiter. Dies vereinfacht eine Rückverschiebung der Bilder bei der Auswertung. Besonders vorteilhaft ist dies in Zusammenhang mit einer Zeilenkamera, die wenige Zeilen aufweist.

Es wird auch ein Verfahren bevorzugt, bei welchem der Gegenstand während einer ganzen Folge von Aufnahmen unter allen $i_{max}$ Beleuchtungssituationen stillsteht. Erst nachdem die letzte Aufnahme unter der letzten Beleuchtungssituation aufgenommen wurde, wird der Gegenstand weiterbewegt. In der neuen Position wird dann eine weitere Folge von Aufnahmen unter allen $i_{max}$ Beleuchtungssituationen aufgenommen. Diese Vorgehensweise wird bevorzugt so lange iteriert, bis die gesamte zu erfassende Oberfläche des Gegenstands oder ein zu erfassender Oberflächenbereich desselben erfasst ist. Unschärfen und/oder Vibrationen in der Bewegung des Gegenstands wirken sich dann nur lokal in einem bestimmten Bereich desselben aus.

Erfindungsgemäß wird zur Aufnahme von Bildern des Gegenstands eine als Zeilenkamera ausgebildete Aufnahmeeinrichtung verwendet, wobei die Zeilenkamera eine oder mehrere Zeilen umfasst. Bei einer bevorzugten Ausführungsform des Verfahrens wird eine Zeilenkamera mit genau einer Zeile verwendet. Bei einer weiteren bevorzugten Ausführungsform des Verfahrens wird eine Zeilenkamera mit wenigen Zeilen verwendet, wobei dies anspricht, dass die Zahl der Zeilen der Kamera sehr viel kleiner ist als die Zahl der Pixel, die in einer Zeile der Kamera nebeneinander angeordnet sind.

Alternativ, aber nicht beansprucht, ist es möglich zur Aufnahme von Bildern des Gegenstands eine Matrixkamera zu verwenden, von deren Chip jedoch nur wenige Zeilen ausgelesen werden, die bevorzugt unmittelbar nebeneinander angeordnet sind. Insoweit ist es möglich, eine als Matrixkamera ausgebildete Kamera wie eine Zeilenkamera zu verwenden, welche mehrere, insbesondere wenige Zeilen umfasst. Es ist auch möglich, aber ebenso nicht beansprucht, nur einige Zeilen des Chips einer als Matrixkamera ausgebildeten Kamera auszulesen, wobei die ausgelesenen Zeilen nicht unmittelbar nebeneinander angeordnet sind. In diesem Fall werden also zwischen den ausgelesenen Zeilen angeordnete Zeilen nicht ausgelesen.

Erfindungsgemäß ist es möglich die optische Formerfassung des Gegenstands mit Hilfe eines Verfahrens gemäß dem Prinzip des photometrischen Stereo durchzuführen. Dieses Verfahren ist beispielsweise in der internationalen Patentanmeldung mit der Veröffentlichungsnummer WO 2004/051186 A1, dort insbesondere auf Seite 7, Zeile 3 bis Seite 11, Zeile 14 offenbart.

Erfindungsgemäß ist auch ein Verfahren möglich, bei welchem die optische Formerfassung des Gegenstands mit Hilfe eines Verfahrens gemäß dem Prinzip der photometrischen Deflektometrie durchgeführt wird. Dieses Verfahren geht ebenfalls insbesondere aus der internationalen Patentanmeldung mit der Veröffentlichungsnummer WO 2004/051186 A1 hervor, dort insbesondere auf Seite 11, Zeile 15 bis Seite 16, Zeile 7.

Es ist zu beachten, dass das Prinzip der photometrischen Deflektometrie eine Kombination eines deflektometrischen Verfahrens mit einem photometrischen Stereoverfahren darstellt.

Die genannten Verfahren, insbesondere das Verfahren der photometrischen Deflektometrie geht/gehen auch aus der deutschen Offenlegungsschrift DE 10 2005 013 614 A1 hervor.

Erfindungsgemäß werden Verfahren gemäß dem Prinzip der photometrischen Deflektometrie oder des photometrischen Stereo unter Verwendung einer Zeilenkamera durchgeführt, die genau eine oder auch mehrere, im oben genannten Sinne wenige Zeilen aufweist.

Wie in Zusammenhang mit der Vorrichtung bereits beschrieben ist es bevorzugt möglich, ein photometrisches Stereoverfahren und/oder ein Verfahren gemäß der photometrischen Deflektometrie mit einem binokularen Stereoverfahren zu kombinieren.

Insbesondere werden bei einem solchen Verfahren die $i_{max}$ verschiedenen Beleuchtungen zeitlich nacheinander und räumlich nebeneinander bezüglich des Gegenstands projiziert. Dabei wird jeder Ort auf dem Gegenstand mit $i_{max}$ Beleuchtungen kombiniert. Die Zahl der Kombinationen ist demnach $i_{max}$ multipliziert mit der um eins verminderten Anzahl der überstrichenen objektseitigen Pixelabstände beziehungsweise Pixelbreiten.

Die Erfindung wird im Folgenden anhand der Zeichnungen näher erläutert. Es zeigen:

Figur 1     eine schematische Darstellung eines Ausführungsbeispiels einer Vorrichtung zur optischen Formerfassung eines bewegten Gegenstands;

Figur 2     eine diagrammatische Darstellung einer Position des Gegenstands in Abhängigkeit der Zeit bei konstanter Geschwindigkeit;

Figur 3     eine diagrammatische Darstellung der Position des Gegenstands in Abhängigkeit der Zeit bei einer schrittweisen Bewegung;

Figur 4A     eine schematische Darstellung eines Ausführungsbeispiels der Vorrichtung unter Verwendung einer Zeilenkamera in Seitenansicht;

Figur 4B     eine schematische Darstellung des Ausführungsbeispiels gemäß Figur 4A in Draufsicht;

Figur 5A     eine schematische Darstellung eines weiteren Ausführungsbeispiels der Vorrichtung mit einer Zeilenkamera in Seitenansicht, und

Figur 5B     eine schematische Darstellung des Ausführungsbeispiels gemäß Figur 5A in Draufsicht.

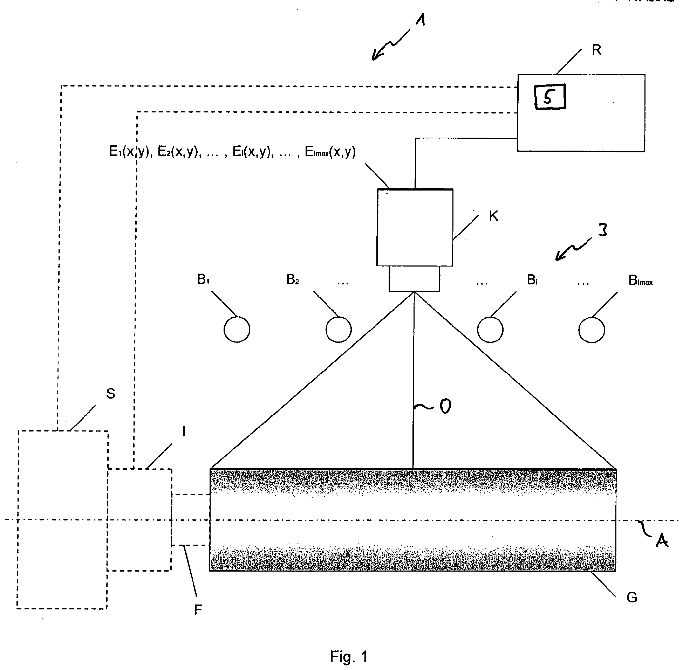

Figur 1 zeigt eine schematische Darstellung eines Ausführungsbeispiels einer Vorrichtung 1 zur optischen Formerfassung eines bewegten Gegenstands G. Sie umfasst eine Beleuchtungseinrichtung 3, welche hier $i_{max}$ Einzelbeleuchtungen $B_1$, $B_2$, ..., $B_i$, ..., $B_{imax}$ umfasst, oder $i_{max}$ Beleuchtungssituationen $B_1$, $B_2$, ..., $B_i$, ..., $B_{imax}$ erzeugen kann. Eine als Kamera K ausgebildete Aufnahmeeinrichtung ist so angeordnet, dass sie Bilder von dem Gegenstand G aufnehmen kann.

Die Vorrichtung umfasst eine Steuerungseinrichtung 5, durch welche eine Bewegung des Gegenstands mithilfe einer Bewegungseinrichtung S vorgebbar ist. Bei dem dargestellten Ausführungsbeispiel ist die Steuerungseinrichtung 5 in eine Recheneinheit R integriert, die zugleich der Auswertung der Kamerabilder dient. Bei anderen Ausführungsbeispielen kann die Steuerungseinrichtung 5 separat von der Recheneinheit R vorgesehen sein. Bei wieder einem anderen Ausführungsbeispiel kann die Recheneinheit R fehlen oder in die Kamera K integriert sein.

Die Kamera K nimmt Bilder $E_1(x,y)$, $E_2(x,y)$, ..., $E_i(x,y)$, ..., $E_{imax}(x,y)$ zumindest von einem Bereich des Gegenstands G auf. Bei einer als Matrixkamera ausgebildeten Kamera K (nicht beansprucht) wird die Bestrahlungsstärke der Bilder $E_i(x,y)$ in Abhängigkeit der beiden Ortskoordinaten x und y aufgenommen. Im Falle einer Zeilenkamera mit genau einer Zeile wird die Bestrahlungsstärke der Bilder $E_i(x)$ nur in Abhängigkeit einer Ortskoordinate x aufgenommen. Die Bewegungseinrichtung S zur Bewegung des Gegenstandes ist hier als Teil der Vorrichtung 1 vorgesehen. Bei einem Ausführungsbeispiel können eine Einrichtung zur Ermittlung der Bewegungsposition I, beispielsweise ein Inkrementalgeber oder ein Glasmaßstab, sowie besonders bevorzugt Befestigungselemente F zur Befestigung des Gegenstands G vorgesehen sein.

Bei einem anderen Ausführungsbeispiel ist es möglich, dass die Bewegungseinrichtung S extern vorgesehen und somit kein Teil der Vorrichtung 1 ist. In diesem Fall ist die Steuerungseinrichtung 5 vorzugsweise mit der externen Bewegungseinrichtung S verbindbar, besonders bevorzugt über eine Schnittstelle.

Die Bewegung des Gegenstandes G wird aktiv von der Vorrichtung 1, insbesondere von der Steuerungseinrichtung 5 vorgegeben. Sie kann dadurch präzise kontrolliert und so beeinflusst werden, wie es für die Formerfassung günstig ist. Vorzugsweise wird die Bewegung, insbesondere eine Geschwindigkeit des Gegenstands G, durch die Steuerungseinrichtung 5 gesteuert, besonders bevorzugt geregelt. Insbesondere ist vorzugsweise zu jedem Zeitpunkt bekannt und vorgegeben, an welchem Ort sich der Gegenstand befindet.

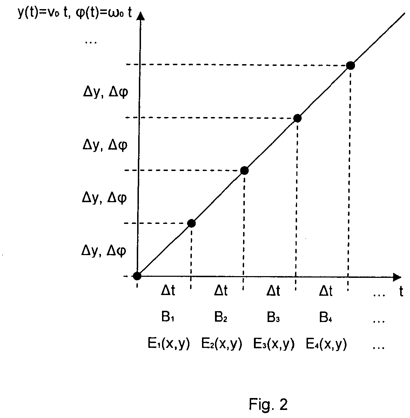

Erfindungsgemäß kann die Bewegung kontinuierlich und mit konstanter Geschwindigkeit bzw. Drehgeschwindigkeit erfolgen. Figur 2 zeigt eine Position y(t) des Gegenstands G in Abhängigkeit der Zeit $t$ im Fall einer translatorischen Bewegung in Richtung der y-Achse. Hierbei ist die Geschwindigkeit $v_0$ konstant:

$$y(t) = v_0 t \, ;$$

$$v_0 = const \, .$$

Analog verhält es sich bei einer Rotation. Figur 2 zeigt daher alternativ oder zusätzlich eine Winkelposition $\varphi(t)$ des Gegenstands G in Abhängigkeit der Zeit $t$. Hierbei ist die Rotationsgeschwindigkeit $\omega_0$, konstant:

$$\varphi(t) = \omega_0 t \, ;$$

$$\omega_0 = const \, .$$

Vorzugsweise werden die Bilder des Gegenstandes periodisch jeweils in einem zeitlichen Abstand $\Delta t$ aufgenommen. Der zeitliche Abstand $\Delta t$ - auch Zeitspanne genannt - umfasst hierbei eine Belichtungszeit der Kamera K sowie Zeiten für das Auslesen und Übertragen der Bildinformation an die Recheneinheit R. Innerhalb einer ersten Zeitspanne $\Delta t$ wird eine erste Bildaufnahme $E_1(x,y)$ unter einer ersten Beleuchtungssituation $B_1$ aktiviert. Innerhalb der Zeitspanne $\Delta t$ bewegt sich der Gegenstand G um eine Distanz $\Delta y = v_0 \Delta t$ bzw. eine Winkeldistanz $\Delta\varphi = \omega_0 \Delta t$ weiter. Innerhalb einer zweiten Zeitspanne $\Delta t$ wird eine zweite Bildaufnahme $E_2(x,y)$ unter einer zweiten Beleuchtungssituation $B_2$ aktiviert. Der Gegenstand G hat sich erneut um die Distanz $\Delta y = v_0 \Delta t$ bzw. die Winkeldistanz $\Delta\varphi = \omega_0 \Delta t$ weiterbewegt, insgesamt also um eine Distanz $2\Delta y$ bzw. $2\Delta\varphi$. Es folgen weitere Bildaufnahmen $E_i(x,y)$, bis die maximale Anzahl der Beleuchtungssituationen $i_{max}$ erreicht ist. Danach setzt sich die Bewegung weiter fort, es werden weitere Bilder

$E_i(x,y)$ aufgenommen und die Abfolge von Beleuchtungssituationen $B_1$ bis $B_{i\max}$ wiederholt sich, bis eine für die Formerfassung ausgewählte Oberfläche oder ein Oberflächenbereich des Gegenstands G vollständig erfasst ist.

Erfindungsgemäß werden die Bilder $E_i(x,y)$ dann so entgegen der Bewegungsrichtung des Gegenstands G in der Bildebene zurückverschoben, dass man deckungsgleiche Bilder $E_i'(x,y)$ desselben erhält:

$$E_1{}'\bigl(x,y\bigr) = E_1\bigl(x,\, y + 1 \cdot \Delta y\bigr)$$

$$E_2{}'\bigl(x,y\bigr) = E_2\bigl(x,\, y + 2 \cdot \Delta y\bigr)$$

$$\dots$$

$$E_i{}'\bigl(x,y\bigr) = E_i\bigl(x,\, y + i \cdot \Delta y\bigr)$$

$$\dots$$

$$E_{i\max}{}'\bigl(x,y\bigr) = E_{i\max}\bigl(x,\, y + i_{\max} \cdot \Delta y\bigr)$$

Vorzugsweise wird die Geschwindigkeit und damit die Distanz $\Delta y$ so gewählt, dass sie zumindest näherungsweise, vorzugsweise genau dem objektseitigen Abstand eines Pixels zum Nachbarpixel $\Delta x_{Pixel}$ auf dem Gegenstand geteilt durch die Anzahl der Beleuchtungssituationen $i_{\max}$ entspricht:

$$\Delta y = \frac{\Delta x_{Pixel}}{i_{\max}}.$$

In diesem Fall wird nach $i_{\max}$ Beleuchtungen eine Distanz von $\Delta x_{Pixel}$ erreicht. Andere Bruchteile sind ebenfalls möglich. Das Rückverschieben der Bilder kann dann auf einfache Weise in der Recheneinheit R stattfinden.

Alternativ kann die Geschwindigkeit und damit die Distanz $\Delta y$ so gewählt werden, dass die Distanz $\Delta y$ zumindest näherungsweise, vorzugsweise genau dem Abstand eines Pixels zum Nachbarpixel $\Delta x_{Pixel}$ auf dem Gegenstand entspricht. Das Rückverschieben der Bilder kann auch in diesem Fall auf einfache Weise in der Recheneinheit R stattfinden.

Alternativ kann ein ganzzahliges Vielfaches $n$ des Pixelabstandes $\Delta y = n\Delta x_{Pixel}$ zurückgelegt werden.

Auch eine Kombination eines ganzzahligen Pixelabstandes und eines Bruchteils sind möglich, ebenso ein völlig frei gewählter Wert. Das Rückverschieben kann in allen diesen Fällen durch Interpolation in der Recheneinheit R erfolgen.

Hier und im Folgenden ist vorzugsweise unter dem Pixelabstand insbesondere bei Verwendung einer Zeilenkamera auch eine Pixelbreite zu verstehen, die senkrecht zur Längserstreckung einer Zeile und parallel zur Bewegungsrichtung des Gegenstands gemessen wird. Umfasst die Zeilenkamera mehrere Zeilen entspricht dieser Abstand einem Abstand zweier benachbarter Pixel in benachbarten Zeilen. Die Pixel sind vorzugsweise quadratisch ausgebildet, sodass deren Breiten beziehungsweise Abstände in y-Richtung und in x-Richtung gleich sind. Insofern entspricht die Länge eines Pixels innerhalb der Zeile $\Delta x_{Pixel}$ beziehungsweise der Abstand zum Nachbarpixel gerade der Breite der Zeile und damit auch der Breite eines Pixels $\Delta y_{Pixel}$. Sind die Pixel dagegen rechteckig mit ungleichen Kantenlängen ausgebildet, ist mit dem Pixelabstand $\Delta x_{Pixel}$ bevorzugt die Pixelbreite $\Delta y_{Pixel}$ gemeint. Diese Ausführungen gelten - wie bereits beschrieben - bevorzugt auch in Hinblick auf die folgenden Erläuterungen, wo sie lediglich der Übersichtlichkeit der Darstellung wegen nicht nochmals wiederholt werden.

Analog verhält es sich für den Fall einer Dreh- oder Schwenkbewegung - allgemein Rotation - des Gegenstands G.

Die Rückverschiebung der Bilder erfolgt vorzugsweise unabhängig von der Bildaufnahme und besonders bevorzugt zeitversetzt zu dieser in der Recheneinheit R.

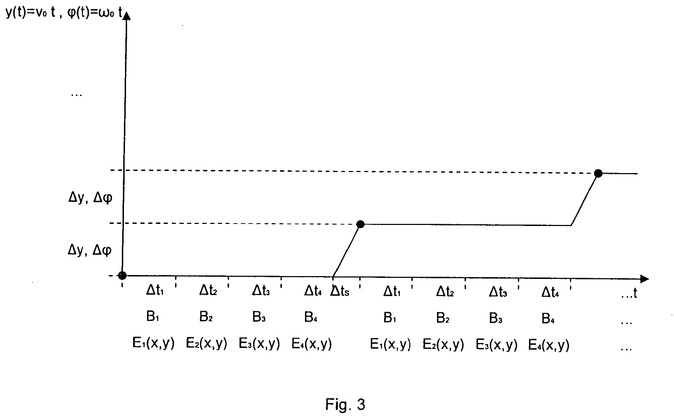

Bei einer anderen Ausführungsform ist es möglich, dass durch die Bewegungseinrichtung S eine Bewegung des Gegenstands G mit zeitlich variabler Geschwindigkeit bis hin zum Stillstand bewirkt wird. Insbesondere ist bevorzugt eine schrittweise Bewegung des Gegenstandes vorgesehen. Figur 3 zeigt die Position $y(t)$ in Abhängigkeit der Zeit $t$ im Fall einer schrittweisen translatorischen Bewegung des Gegenstands G in Richtung der y-Achse. Analog verhält es sich bei einer Rotation. Figur 3 zeigt daher alternativ oder zusätzlich die Winkelposition $\varphi(t)$ in Abhängigkeit der Zeit t. In Fig. 3 wurde eine Anzahl von $i_{\max}$ = 4 Beleuchtungssituationen angenommen, andere Zahlen sind aber ebenso möglich.

Die Bilder des Gegenstandes werden bevorzugt in den Zeitabständen $\Delta t_1$, $\Delta t_2$, ... , $\Delta t_i$, ... , $\Delta t_{i\max}$ aufgenommen. Insbesondere können die verschiedenen Zeitabstände $\Delta t_i$ gleich sein. Die Zeitspanne $\Delta t_i$ umfasst hierbei die Belichtungszeit der Kamera K sowie die Zeiten für das Auslesen und Übertragen der Bildinformation an die Recheneinheit R. Innerhalb der ersten Zeitspanne $\Delta t_1$ wird eine erste Bildaufnahme $E_1(x,y)$ sowie eine erste Beleuchtung $B_1$ aktiviert. Innerhalb der ersten Zeitspanne $\Delta t_1$ verbleibt der Gegenstand G am selben Ort. Innerhalb der zweiten Zeitspanne $\Delta t_2$ wird eine zweite Bildaufnahme $E_2(x,y)$ sowie eine zweite Beleuchtung $B_2$ aktiviert. Der Gegenstand G verbleibt am selben Ort. Es erfolgen weitere Bildaufnahmen $E_i(x,y)$, bis die maximale Anzahl der Beleuchtungssituationen $i_{\max}$ - hier vier - erreicht ist. Erst danach wird der Gegenstand in der Zeit

$\Delta t_S$ um eine vorgegebene Distanz $\Delta y$ weiterbewegt. Danach wiederholt sich die Folge von Beleuchtungssituationen $B_1$ bis $B_{i\max}$, und es werden weitere Bilder $E_1(x,y)$ bis $E_{i\max}(x,y)$ aufgenommen, bis eine vorbestimmte Oberfläche oder ein vorbestimmter Oberflächenbereich des Gegenstands G vollständig erfasst ist.

In diesem nicht beanspruchten Fall sind die Bilder $E_1(x,y)$ bis $E_{i\max}(x,y)$ deckungsgleich und müssen daher nicht zurückverschoben werden.

Vorzugsweise wird die Distanz $\Delta y$ genau so gewählt, dass sie zumindest näherungsweise, vorzugsweise genau dem Abstand eines Pixels zum Nachbarpixel $\Delta x_{Pixel}$ auf dem Gegenstand entspricht.

Alternativ kann ein ganzzahliges Vielfaches n des Pixelabstandes $\Delta y = n\Delta x_{Pixel}$ zurückgelegt werden.

Alternativ kann ein festgelegter Bruchteil $1/n$ eines Pixelabstandes zurückgelegt werden. In diesem Fall wird nach genau n Zeitabschnitten wieder eine Distanz von $\Delta x_{Pixel}$ erreicht. Insbesondere ist es möglich, $n = i_{\max}$ zu wählen. Andere Bruchteile sind ebenfalls möglich.

Auch eine Kombination eines ganzzahligen Pixelabstandes und eines Bruchteils sind denkbar, ebenso ein völlig frei gewählter Wert.

Eine Ausführungsform, bei welcher eine gesamte Bildfolge unter einer gesamten Folge von Beleuchtungssituationen $B_1$ bis $B_{i\max}$ aufgenommen wird, wobei der Gegenstand G stillsteht und nur zwischen den einzelnen Folgen bewegt wird, hat darüber hinaus den Vorteil, dass sich Schwingungen oder Bewegungsungenauigkeiten des Gegenstands nur lokal genau an der Stelle der Oberfläche des Gegenstands G auswirken, die gerade innerhalb der Bildfolge erfasst wird.

Gleichwohl ist es bei einer anderen Ausführungsform des Verfahrens möglich, den Gegenstand G schrittweise nach jeder Bildaufnahme unter einer bestimmten Beleuchtungssituation schrittweise weiterzubewegen. In diesem Fall ist es allerdings nötig, die Bilder rückzuverschieben.

Vorzugsweise werden in diesem Fall die Geschwindigkeit und damit die Distanz $\Delta y$ so gewählt, dass die Distanz $\Delta y$ zumindest näherungsweise, vorzugsweise genau dem Abstand eines Pixels zum Nachbarpixel $\Delta x_{Pixel}$ auf dem Gegenstand entspricht. Das Rückverschieben der Bilder kann dann auf einfache Weise in der Recheneinheit R stattfinden.

Alternativ kann ein ganzzahliges Vielfaches n des Pixelabstandes $\Delta y = n\Delta x_{Pixel}$ zurückgelegt werden.

Alternativ kann ein festgelegter Bruchteil $1/n$ eines Pixelabstandes zurückgelegt werden. In diesem Fall wird nach genau n Zeitabschnitten wieder eine Distanz von $\Delta x_{Pixel}$ erreicht. Insbesondere ist es möglich, $n = i_{\max}$ zu wählen. Andere Bruchteile sind ebenfalls möglich.

Auch eine Kombination eines ganzzahligen Pixelabstandes und eines Bruchteils sind denkbar, ebenso ein völlig frei gewählter Wert. Das Rückverschieben kann in allen diesen Fällen durch Interpolation in der Recheneinheit R erfolgen.

Analog verhält es sich für den Fall der Rotation.

Besonders vorteilhaft ist es, wenn zur Bewegung des Gegenstandes G eine Bewegungseinrichtung S verwendet wird, welche aufgrund ihres Aufbaus die geforderte schrittweise Bewegung auf einfach Weise, in kürzester Zeit und höchster Präzision ermöglicht.

Eine Rotation, insbesondere eine Dreh- oder Schwenkbewegung des Gegenstands G, kann vorzugsweise so erfolgen, dass eine in Figur 1 dargestellte optische Achse O der Kamera K schräg zu Rotationsachse A angeordnet ist, insbesondere senkrecht auf dieser steht.

Eine schrittweise rotative Bewegung ist insbesondere mit Hilfe eines Schrittmotors möglich. Die Bewegung dieses Motors erfolgt prinzipbedingt in Rotationsschritten. Es erfolgt ein wiederkehrender Wechsel von Rotationsbewegung und Stillstand. Die Rotationsschritte werden über ein in Schritten schaltbares Magnetfeld vorgegeben. Das Magnetfeld kann wiederum durch eine elektronische Steuereinheit, vorzugsweise durch die Steuerungseinrichtung 5, in minimalen Zeitabständen geschaltet werden. Üblich sind Zeiten von wenigen Mikrosekunden. Die Zahl der möglichen Schritte pro Umdrehung kann bis zu mehreren Zigtausend reichen. Es können auch mehrere Schritte in kurzer zeitlicher Folge aneinandergereiht werden, so dass dadurch ein größerer Schritt mit vorgebbarer Weite entsteht. Somit kann höchste Präzision bei der Umsetzung der Bewegungsschritte erreicht werden. Die Umsetzung einer solchen als Rotationseinheit ausgebildeten Bewegungseinrichtung S ist in vielen Fällen kostengünstig, einfach und mit wenigen Komponenten möglich.

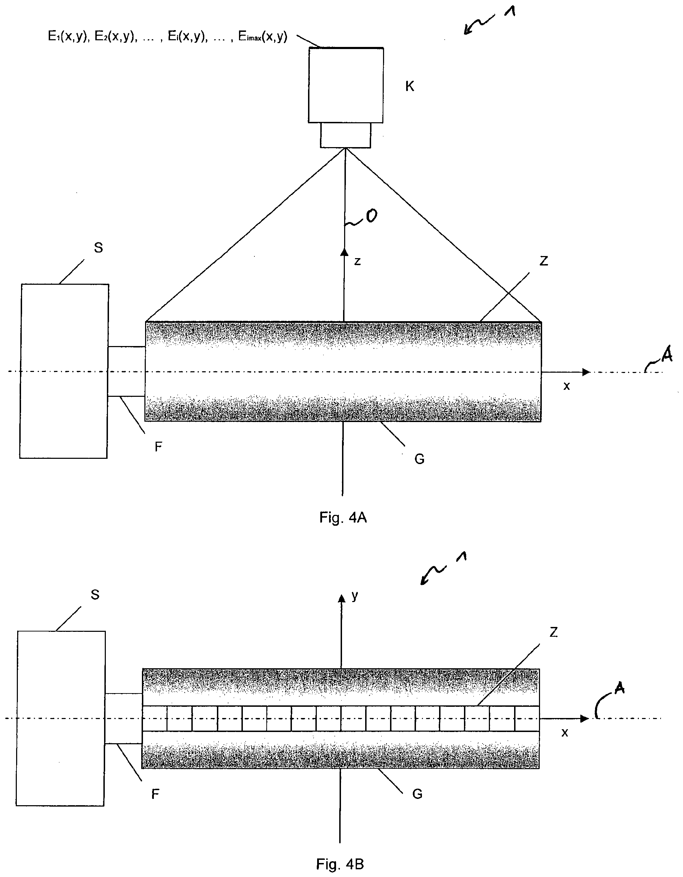

Die Figuren 4A und 4B zeigen ein weiteres Ausführungsbeispiel der Vorrichtung 1. Gleiche und funktionsgleiche Elemente sind mit gleichen Bezugszeichen versehen, sodass insofern auf die vorangegangene Beschreibung verwiesen wird. Die Kamera K ist hier als Zeilenkamera ausgebildet. Diese umfasst bei dem dargestellten Ausführungsbeispiel eine Kamerazeile. Bei einem anderen Ausführungsbeispiel ist es möglich, dass die als Zeilenkamera ausgebildete Kamera K mehrere Kamerazeilen umfasst.

Figur 4A zeigt eine Seitenansicht der Vorrichtung 1. Figur 4B stellt eine schematische Ansicht in Draufsicht dar, wobei der Betrachter quasi an der Position der Kamera K sitzt und auf eine auf den Gegenstand G projizierte Kamerazeile Z der Kamera K schaut, beziehungsweise auf einen Bereich der Oberfläche des Gegenstands G, welcher von der Kamerazeile Z erfasst wird.

Bevorzugt steht der Gegenstand G zunächst am selben Ort still. Es wird eine erste Beleuchtungssituation $B_1$ erzeugt, die mindestens eine Kamerazeile Z wird belichtet, ausgelesen und an die Recheneinheit R übermittelt. Danach wird eine zweite Beleuchtungssituation $B_2$ erzeugt, und die mindestens eine Kamerazeile Z wird auf dieselbe Weise belichtet, ausgelesen und übertragen. Dies wird solange wiederholt, bis die vorgegebene Anzahl an Beleuchtungssituationen $i_{\max}$ erreicht und der zugehörige Satz an Kamerazeilen Z übertragen wurde.

Die Kamerazeilen Z enthalten räumlich deckungsgleiche Information über einen zeilenförmigen Abschnitt des Gegenstandes G unter den vorgegebenen Beleuchtungssituationen $B_1$ bis $B_{imax}$ Eine rechnerische und erfindungsgemäße Rückverschiebung der Zeilen Z ist nicht notwendig.

Danach wird der Gegenstand auf vorgegebene Weise um die Achse A gedreht, vorzugsweise um einen Pixelabstand $\Delta x_{Pixel}$ beziehungsweise eine Pixelbreite $\Delta y_{Pixel}$ am Umfang. Alternativ ist ein ganzzahliges Vielfaches hiervon, ein Bruchteil hiervon oder ein völlig frei vorgebbarer Wert möglich.

Die Bewegung wird zum Stillstand gebracht. Danach wird die Abfolge der Beleuchtungssituationen $B_1$ bis $B_{imax}$ wiederholt und ein weiterer Satz an zugehörigen Kamerazeilen Z an die Recheneinheit R übertragen.

Diese Abfolge wird solange wiederholt, bis eine gewünschte Anzahl an Zeilensätzen aufgenommen wurde. Dies ist vorteilhaft dann gegeben, wenn zumindest eine ganze Umdrehung des Gegenstands G erreicht ist. Die beschriebene Ausführungsform der Erfindung kann vorteilhaft zur Formerfassung von rotationssymmetrischen Gegenständen G, insbesondere von gedrehten oder rundgeschliffenen Gegenständen G und Bauteilen zum Einsatz kommen. Ebenso können Bauteile erfasst werden, welche eine unregelmäßige Form aufweisen.

Bei einer anderen Ausführungsform ist es möglich, den Gegenstand G nach jeder Bildaufnahme beziehungsweise jeder Beleuchtungssituation um eine Schrittweite weiterzudrehen. In diesem Fall ergeben sich allerdings die gleichen Nachteile, die bereits in Zusammenhang mit einer entsprechenden schrittweisen translatorischen Bewegung erläutert wurden.

Bei einer anderen Ausführungsform kann die Rotationsbewegung vorzugsweise so erfolgen, dass die optische Achse O der Kamera K parallel oder näherungsweise parallel zur Achse A der Rotationsbewegung ausgerichtet ist. Dies ist insbesondere dann der Fall, wenn der Gegenstand mit Hilfe eines Rundtakttisches oder eines Glasdrehtellers als Bewegungseinrichtung präsentiert wird.

Bei einer translatorischen Bewegung des Gegenstands G wird die optische Achse O vorzugsweise schräg zur Bewegungsrichtung festgelegt, besonders bevorzugt senkrecht oder nahezu senkrecht zu dieser. Bevorzugt kann ein Schrittmotor zur Anwendung kommen. In diesem Fall wird vorzugsweise die rotative Bewegung des Motors durch eine geeignete Getriebeeinheit in eine translatorische Bewegung übersetzt. Hierbei ist darauf zu achten, dass die Getriebeeinheit weitgehend frei von Schlupf und zeitlicher dynamischer Verzögerung des Schrittmotors arbeitet. Alternativ ist es möglich, einen vorzugsweise elektrischen Linearantrieb zu verwenden, welcher ebenfalls präzise vorgebbare Bewegungsschritte in kürzester Zeit umsetzen kann. Auch eine numerisch gesteuerte Antriebseinheit (CNC-Einheiten) ist möglich.

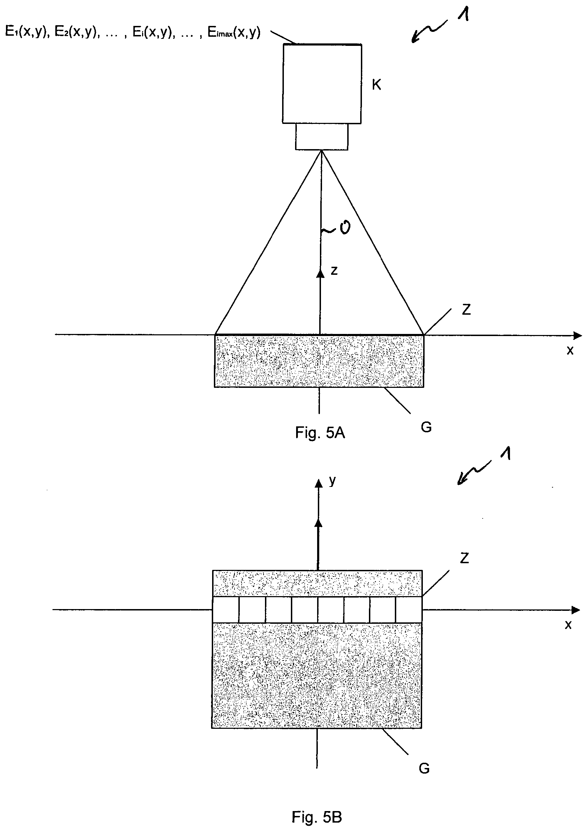

Die Figuren 5A und 5B zeigen ein weiteres Ausführungsbeispiel der Vorrichtung 1, bei welchem eine translatorische Bewegung des Gegenstands G entlang einer Koordinate y bewirkt wird. Bei dem dargestellten Ausführungsbeispiel ist die Kamera K als Zeilenkamera ausgebildet, die in bereits beschriebener Weise eine oder auch mehrere Kamerazeilen Z umfassen kann. Bei dem dargestellten Ausführungsbeispiel umfasst die Kamera K eine Kamerazeile Z, die sich entlang der x-Richtung erstreckt. Figur 5A zeigt eine Seitenansicht der Vorrichtung 1. In Figur 5B ist eine Draufsicht dargestellt, wobei der Betrachter sich ungefähr an der Position der Kamera K befindet und auf einen zu erfassenden Oberflächenbereich des Gegenstands G schaut, wobei die Kamerazeile Z hierauf projiziert ist, beziehungsweise auf einen Bereich der Oberfläche des Gegenstands G, welcher von der Kamerazeile Z erfasst wird. Dieser Bereich ist ebenfalls mit dem Buchstaben Z gekennzeichnet.

Der Gegenstand G steht bevorzugt zunächst am selben Ort still. Es wird eine erste Beleuchtungssituation $B_1$ aktiviert, die mindestens eine Kamerazeile Z wird belichtet, ausgelesen und an die Recheneinheit R übermittelt. Danach wird die erste Beleuchtungssituation $B_1$ deaktiviert und eine zweite Beleuchtungssituation $B_2$ wird aktiviert. Die mindestens eine Kamerazeile Z wird auf dieselbe Weise belichtet, ausgelesen und übertragen. Dies wird solange wiederholt, bis die vorgegebene Anzahl $i_{max}$ an Beleuchtungssituationen $B_{imax}$ erreicht und der zugehörige Satz an Kamerazeilen Z übertragen wurde. Die Kamerazeilen Z enthalten räumlich deckungsgleiche Information über einen zeilenförmigen Abschnitt des Gegenstandes G unter den vorgegebenen Beleuchtungssituationen $B_1$ bis $B_{imax}$. Eine rechnerische und erfindungsgemäße Rückverschiebung der Zeilen Z ist nicht notwendig.

Danach wird der Gegenstand auf vorgegebene Weise bewegt, vorzugsweise um einen Pixelabstand $\Delta x_{Pixel}$ beziehungsweise eine vorzugsweise identische Pixelbreite $\Delta y_{Pixel}$. Alternativ ist ein ganzzahliges Vielfaches hiervon, ein Bruchteil hiervon oder ein völlig frei vorgebbarer Wert möglich. Die Bewegung wird zum Stillstand gebracht. Danach wird die Abfolge der Beleuchtungssituationen $B_1$ bis $B_{imax}$ wiederholt, und ein weiterer Satz an zugehörigen Kamerazeilen Z wird an die Recheneinheit R übertragen. Diese Abfolge wird solange wiederholt, bis eine gewünschte Anzahl an Zeilensätzen aufgenommen wurde. Dies ist vorteilhaft dann gegeben, wenn eine gesamte Oberfläche des Gegenstands G oder ein vorbestimmter Bereich desselben erfasst ist.

Die beschriebene Ausführungsform der Erfindung kann vorteilhaft zur Formerfassung von Profilmaterialien, Bandmaterialien, Schweißnähten und anderen zum Einsatz kommen. Besonders vorteilhaft ist der Einsatz zur Erfassung von einzelnen Bauteilen, welche an einem Streifen oder Band gefertigt werden, wie dies bei Stanzteilen der Fall ist.

Bei einer anderen Ausführungsform ist es möglich, den Gegenstand G nach jeder Bildaufnahme bezie-

hungsweise jeder Beleuchtungssituation $B_1$ bis $B_{imax}$ um eine Schrittweite zu bewegen. Hierbei sind allerdings die bereits beschriebenen Nachteile in Kauf zu nehmen.

Eine weitere Ausführungsform der Erfindung wird im Folgenden dargestellt, aber nicht beansprucht. Die Kamera K ist hierbei als Matrixkamera ausgebildet. Der Gegenstand G steht bevorzugt zunächst am selben Ort still. Es wird eine erste Beleuchtungssituation $B_1$ erzeugt, ein Kamerabild belichtet, ausgelesen und an die Recheneinheit R übermittelt. Danach wird eine zweite Beleuchtungssituation $B_2$ erzeugt und ein Kamerabild auf dieselbe Weise belichtet, ausgelesen und übertragen. Dies wird solange wiederholt, bis die vorgegebene Anzahl an Beleuchtungssituationen $B_{imax}$ erreicht und der zugehörige Satz an Kamerabildern übertragen wurde. Die Kamerabilder enthalten räumlich deckungsgleiche Information über den Gegenstand G unter den vorgegebenen Beleuchtungssituationen. Eine rechnerische Rückverschiebung der Bilder ist nicht notwendig. Danach wird der Gegenstand G auf vorgegebene Weise weiterbewegt, vorzugsweise bis dahin, wo der bisher aufgenommene Bereich endet oder auch bereits ein weiterer Gegenstand G im Bildfeld positioniert ist. Vorteilhaft ist ein ganzzahliges Vielfaches eines Pixelabstandes zu wählen. Die Bewegung wird zum Stillstand gebracht. Danach wird die Abfolge der Beleuchtungssituationen $B_1$ bis $B_{imax}$ wiederholt und ein weiterer Satz an zugehörigen Kamerabildern an die Recheneinheit R übertragen. Diese Abfolge wird solange wiederholt, bis eine gewünschte Anzahl an Bildersätzen aufgenommen wurde. Bei translatorischer Bewegung ist dies vorteilhaft dann gegeben, wenn der Gegenstand G vollständig überstrichen wurde, oder die vorgegebene Anzahl von Gegenständen G erfasst wurde.

Ist die Kamera K als Matrixkamera ausgebildet, was aber nicht beansprucht wird, kann vorzugsweise ein gesamter lichtempfindlicher Chip der Kamera K ausgelesen werden. Es ist aber auch möglich, nur einige Zeilen des Chips auszulesen. Insoweit ist es möglich, eine als Matrixkamera ausgebildete Kamera K wie eine Zeilenkamera zu verwenden, welche mehrere, insbesondere wenige Zeilen umfasst. Es ist auch möglich, nur einige Zeilen des Chips einer als Matrixkamera ausgebildeten Kamera K auszulesen, wobei die ausgelesenen Zeilen nicht unmittelbar nebeneinander angeordnet sind. In diesem Fall werden also zwischen den ausgelesenen Zeilen angeordnete Zeilen nicht ausgelesen. Schließlich ist es noch möglich, dass die Kamera K als Matrixkamera ausgebildet ist, welche nur wenige Zeilen umfasst. Die Kamera K kann insbesondere im Übergangsbereich zwischen einer Zeilenkamera mit mehreren Zeilen und einer Matrixkamera mit wenigen Zeilen einzuordnen sein. Die beschriebene Ausführungsform der Erfindung kann vorteilhaft zur Formerfassung von Profilmaterialien, Bandmaterialien, Schweißnähten und anderen zum Einsatz kommen. Besonders vorteilhaft ist der Einsatz zur Erfassung von einzelnen Bauteilen, welche an einem Streifen oder Band gefertigt werden, wie dies bei Stanzteilen der Fall ist.

Es zeigt sich Folgendes: Verschiedene Ausführungsformen beziehungsweise Ausführungsbeispiele der Erfindung wurden bisher anhand eines zu erfassenden Gegenstandes G erläutert. Es ist jedoch ohne Weiteres möglich, mehrere Gegenstände G nacheinander und/oder gleichzeitig zu erfassen. Die bisherigen Ausführungen sind also keinesfalls einschränkend in dem Sinne zu verstehen, dass mit dem Gegenstand G notwendig ein einziger Gegenstand G angesprochen ist. Völlig analog zu den beschriebenen Ausführungsformen und Ausführungsbeispielen ist es möglich, mehrere Gegenstände G zu erfassen.

Eine Kombination von linearer Bewegung und rotativer Bewegung ist ebenfalls möglich. Die Kombination ergibt bevorzugt eine schraubenförmige Bewegung. Der Gegenstand wird vorzugsweise mit Hilfe einer als Zeilenkamera ausgebildeten Kamera K erfasst. Diese Bewegung ist insbesondere geeignet für lange, rotationssymmetrische Bauteile wie zylinderförmige Stangen. Ebenso ist eine Kombination mehrerer Rotations- und oder Translationsachsen möglich. Hierdurch sind weitere Freiheitsgrade der Bewegung möglich.

Bei einer weiteren Ausführungsform ist es möglich, eine Bewegung derart zu bewirken, dass die Bewegungseinrichtung S zunächst eine translatorische Bewegung des Gegenstands G bewirkt, dann eine Folge von Aufnahmen vorgesehen ist, wobei der Gegenstand nach dieser Folge von der Bewegungseinrichtung S um eine Rotationsachse A verschwenkt wird. Es folgt dann eine weitere Folge von Aufnahmen vorzugsweise unter allen Beleuchtungssituationen $B_1$ bis $B_{imax}$. Danach wird der Gegenstand G wiederum eine Schrittweite um die Achse A verschwenkt, und es folgt eine weitere Folge von Aufnahmen. Dies wird solange wiederholt, bis ein vorgegebener Umfangsbereich des Gegenstands G - vorzugsweise dessen gesamter Umfang - erfasst ist. Danach erfolgt erneut eine schrittweise Translation des Gegenstands G, und die Erfassung der Umfangsfläche beginnt erneut. Insgesamt erfolgt also eine vollständige Erfassung eines vorgegebenen Bereichs der Umfangsfläche G, vorzugsweise der gesamten Umfangsfläche des Gegenstands G, an dem jeweiligen Ort, an welchen der Gegenstand G translatorisch positioniert wurde. Jeweils zwischen der Erfassung der einzelnen Umfangsbereiche wird der Gegenstand G translatorisch weiterbewegt.

Sämtliche hier beschriebenen Ausführungsbeispiele und Ausführungsformen lassen sich mit verschiedenen optischen 3D-Verfahren kombinieren.

Beispielsweise kann die Beleuchtungseinrichtung 3 vorzugsweise als Vorrichtung zur Streifenprojektion ausgebildet sein. Die einzelnen Beleuchtungssituationen $B_1$ bis $B_{imax}$ umfassen dann Streifenmuster, beispielsweise in der Form von Mustern mit sinusförmiger Beleuchtungsstärke, rechteckförmiger Beleuchtungsstärke oder anderen Funktionen der Beleuchtungsstärke.

Besonders bevorzugt ist die Vorrichtung 1 so ausgebildet, dass sie nach Art des photometrischen Stereos und/oder der photometrischen Deflektometrie arbeitet, wobei diese Verfahren in EP 1 567 827 A1 beziehungsweise WO 2004/051186 A1, EP 1 864 081 A1 beziehungsweise WO 2006/100077 A1 und DE 10 2008 022 292 A1 beschrieben sind. Verschiedene Beleuchtungen $B_1$ bis $B_{i\max}$ treffen dann aus verschiedenen Raumrichtungen auf den Gegenstand G.

Erfindungsgemäß werden im Rahmen des Verfahrens ein Verfahren nach Art des photometrischen Stereo und/oder der photometrischen Deflektometrie mit der Verwendung einer Zeilenkamera kombiniert. Hierbei werden die $i_{\max}$ Beleuchtungen zeitlich nacheinander und räumlich nebeneinander bezüglich des Gegenstandes projiziert. Jeder Ort wird mit $i_{\max}$ Beleuchtungen kombiniert. Die Zahl der Kombinationen ist somit $i_{\max}$ multipliziert mit der um eins verminderten Anzahl der überstrichenen objektseitigen Pixelabstände beziehungsweise Pixelbreiten. Bevorzugt wird eine Zeilenkamera verwendet, die genau eine Zeile aufweist. Bei einer alternativen Ausführungsform des Verfahrens oder bei einem alternativen Ausführungsbeispiel der Vorrichtung ist vorgesehen, dass eine Zeilenkamera mit mehreren, insbesondere wenigen Zeilen verwendet wird.

Auch andere Verfahren und Vorrichtungen zur Formerfassung bewegter Gegenstände G können mit den hier beschriebenen Verfahren beziehungsweise der hier beschriebenen Vorrichtung kombiniert werden. Insbesondere ist dies mit der Lehre des Dokuments EP 1 949 673 A1 beziehungsweise WO 2007/054332 A1 möglich.

Schließlich ist es möglich, das Verfahren und die Vorrichtung mit dem Prinzip der Interferometrie zu kombinieren. Die einzelnen Beleuchtungssituationen $B_1$ bis $B_{i\max}$ unterscheiden sich dann bezüglich der Phasenlage einer Beleuchtungswelle (Phasenschieben). Besonders bevorzugt wird ein schnelles zeitliches Phasenschieben mithilfe eines Piezoantriebs erreicht.

Schließlich ist es auch möglich, dass die Beleuchtungseinrichtung 3 einen Laser umfasst, wobei besonders bevorzugt das Laserlichtschnittverfahren oder das Verfahren der Laserinterferometrie zur optischen Formerfassung des Gegenstands G angewendet werden.

Insgesamt zeigt sich, dass mithilfe der Vorrichtung und des Verfahrens insbesondere der Nachteil überwunden werden kann, dass eine Bewegungssteuerung und/oder -kontrolle zu erfassender Gegenstände G bei bekannten Vorrichtungen und Verfahren nicht auf die Erfordernisse der optischen Formerfassung abgestimmt werden können. Das Verfahren und die Vorrichtung stellen daher eine Möglichkeit bereit, besonders genaue und robuste Daten zur optischen Formerfassung zu erhalten.

**Patentansprüche**

1.  Verfahren zur optischen Formerfassung eines Gegenstands (G), mit folgenden Schritten:

    a) Auswählen einer Anzahl $i_{\max}$ von Beleuchtungssituationen $(B_1,...,B_{i\max})$,
    b) Aktivieren einer ersten Beleuchtungssituation $(B_1,...,B_{i\max})$,
    c) Beleuchten eines Gegenstands (G) mit der aktivierten Beleuchtungssituation $(B_1,...,B_{i\max})$,
    d) Aufnahme eines Bildes des Gegenstands (G) unter der aktivierten Beleuchtungssituation $(B_1,...,B_{i\max})$,
    e) Deaktivieren der aktiven Beleuchtungssituation $(B_1,...,B_{i\max})$ und Aktivieren einer nächsten Beleuchtungssituation $(B_1,...,B_{i\max})$,
    f) Wiederholen der Schritte c) bis e) solange, bis Bilder des Gegenstands (G) unter allen $i_{\max}$ Beleuchtungssituationen $(B_1,...,B_{i\max})$ aufgenommen wurden, wobei

    - der Gegenstand (G) mithilfe einer Bewegungseinrichtung (S) bewegt wird, wobei
    - eine Steuerungseinrichtung (5) der Vorrichtung (1) zur optischen Formerfassung eine Bewegung des Gegenstands (G) mithilfe der Bewegungseinrichtung (S) vorgibt, und wobei
    - zur Aufnahme von Bildern des Gegenstands (G) eine Kamera (K) verwendet wird, die als Zeilenkamera mit einer oder mehreren Zeilen ausgebildet ist,
    **dadurch gekennzeichnet, dass**
    - zur optischen Formerfassung des Gegenstands (G) ein Verfahren gemäß dem Prinzip des photometrischen Stereo oder der photometrischen Deflektometrie durchgeführt wird, wobei
    - die aufgenommenen Bilder so entgegen der Bewegungsrichtung des Gegenstands (G) in der Bildebene zurückverschoben werden, dass deckungsgleiche Bilder des Gegenstands (G) erhalten werden.

2.  Verfahren nach Anspruch 1, **dadurch gekennzeichnet, dass** eine translatorische und/oder eine Schwenk- beziehungsweise Drehbewegung des Gegenstands (G) bewirkt wird.

3.  Verfahren nach einem der vorhergehenden Ansprüche, **dadurch gekennzeichnet, dass** eine Geschwindigkeit des Gegenstands (G) konstant und so gewählt ist, dass ein Versatz des Gegenstands (G) in aufeinanderfolgenden Bildern einem objektseitigen Pixelabstand einer vorzugsweise als Kamera (K) ausgebildeten Aufnahmeeinrichtung dividiert durch die Anzahl $i_{\max}$ der Beleuchtungssituationen $(B_1,...,B_{i\max})$ gleich ist oder diesem näherungsweise entspricht.

**4.** Verfahren nach einem der vorhergehenden Ansprüche, **dadurch gekennzeichnet, dass** eine schrittweise Bewegung des Gegenstands bewirkt wird, wobei der Gegenstand (G) zumindest während der Aufnahme eines Bildes vorzugsweise unter jeder Beleuchtungssituation ($B_1,...,B_{imax}$) stillsteht.

**5.** Verfahren nach einem der vorhergehenden Ansprüche, **dadurch gekennzeichnet, dass** der Gegenstand (G) während einer ganzen Folge von Aufnahmen unter allen $i_{max}$ Beleuchtungssituationen ($B_1,...,B_{imax}$) stillsteht und erst anschließend weiterbewegt wird, wobei in der neuen Position eine weitere Folge von Aufnahmen unter allen $i_{max}$ Beleuchtungssituationen ($B_1,...,B_{imax}$) aufgenommen wird.

**6.** Verfahren nach einem der vorhergehenden Ansprüche, **dadurch gekennzeichnet, dass** zur Aufnahme von Bildern des Gegenstands (G) eine Kamera (K) verwendet wird, die als Zeilenkamera mit genau einer Zeile ausgebildet ist.

**7.** Vorrichtung zur optischen Formerfassung eines bewegten Gegenstands (G) zur Durchführung eines Verfahrens nach einem der Ansprüche 1 bis 6, mit

   - mindestens einer Beleuchtungseinrichtung (3), die so ausgebildet und/oder angeordnet ist, dass durch sie verschiedene Beleuchtungssituationen ($B_1,...,B_{imax}$) des zu erfassenden Gegenstands (G) bewirkbar sind, und mit
   - mindestens einer Aufnahmeeinrichtung, die so ausgebildet und angeordnet ist, dass Bilder von dem Gegenstand (G) durch sie aufnehmbar sind, wobei
   - die Vorrichtung (1) eine Steuerungseinrichtung (5) aufweist, die ausgebildet ist zur Vorgabe einer Bewegung des Gegenstands (G) mithilfe einer Bewegungseinrichtung (S), und wobei
   - die Aufnahmeeinrichtung eine Kamera (K) aufweist, die als Zeilenkamera ausgebildet ist, welche eine oder mehrere Zeilen umfasst,
   **dadurch gekennzeichnet, dass**
   - die Beleuchtungseinrichtung (3) eine Vorrichtung umfasst, mithilfe derer ein Verfahren gemäß dem Prinzip des photometrischen Stereo oder der photometrischen Deflektometrie durchführbar ist, wobei
   - die Vorrichtung (1) eingerichtet ist, um die aufgenommenen Bilder so entgegen der Bewegungsrichtung des Gegenstands (G) in der Bildebene zurück zu verschieben, dass deckungsgleiche Bilder des Gegenstands (G) erhalten werden.

**8.** Vorrichtung nach Anspruch 7, **dadurch gekennzeichnet, dass** durch die Steuerungseinrichtung (5) eine Bewegung, insbesondere eine Geschwindigkeit des Gegenstands (G) Steuer- und/oder regelbar ist.

**9.** Vorrichtung nach einem der Ansprüche 7 und 8, **dadurch gekennzeichnet, dass** die Vorrichtung (1) die Bewegungseinrichtung (S) aufweist, und dass vorzugsweise durch die Bewegungseinrichtung (S) eine translatorische Bewegung und/oder eine Schwenk- beziehungsweise Drehbewegung des Gegenstands (G) bewirkbar ist.

**10.** Vorrichtung nach einem der Ansprüche 7 bis 9, **dadurch gekennzeichnet, dass**

   a) durch die Bewegungseinrichtung (S) eine Bewegung des Gegenstands (G) mit konstanter Geschwindigkeit bewirkbar ist, oder
   b) durch die Bewegungseinrichtung (S) eine schrittweise Bewegung des Gegenstands (G) bewirkbar ist, und/oder
   c) die Bewegungseinrichtung (S) einen Schrittmotor, Linearmotor oder eine numerisch gesteuerte Bewegungseinrichtung (CNC-Einrichtung) umfasst.

**11.** Vorrichtung nach einem der Ansprüche 7 bis 10, **dadurch gekennzeichnet, dass** die Beleuchtungseinrichtung (3) mindestens zwei Leuchten umfasst, die an verschiedenen Positionen so angeordnet sind, dass durch sie der Gegenstand (G) aus verschiedenen Richtungen beleuchtbar ist.

**Claims**

**1.** A method for optically measuring the shape of an object (G), with the following steps:

   a) selecting a number imax of lighting situations ($B_1,...,B_{imax}$),
   b) activating a first lighting situation ($B_1,...,B_{imax}$),
   c) illuminating an object (G) with the activated lighting situation ($B_1,...,B_{imax}$),
   d) capturing an image of the object (G) in the activated lighting situation ($B_1,...,$ Bi max),
   e) deactivating the active lighting situation ($B_1,...,B_{imax}$) and activating a next lighting situation ($B_1,...,B_{imax}$),
   f) repeating steps c) to e) until images of the object (G) have been captured in all imax lighting situations ($B_1,...,B_{imax}$), wherein

      - the object (G) is moved with the help of a movement device (S), wherein
      - a control device (5) of the device (1) for optically measuring the shape specifies a movement of the object (G) with the help of the movement device (S), and wherein

- a camera (K), which is configured as line scan camera comprising one or several lines, is used to capture images of the object (G),

**characterized in that**

- a method according to the principle of the photometric stereo or of the photometric deflectometry is carried out for optically measuring the shape of the object (G), wherein
- the captured images are shifted back opposite to the direction of movement of the object (G) in the image plane such that congruent images of the object (G) are received.

2. The method according to claim 1, **characterized in that** a translatory and/or a pivoting or rotational movement, respectively, of the object (G) is effected.

3. The method according to any one of the preceding claims, **characterized in that** a speed of the object (G) is constant and is selected such that an offset of the object (G) in consecutive images is identical a pixel distance on the object side of a capturing device, which is preferably configured as camera (K), divided by the number $i_{max}$ of the lighting situation $(B_1,..., B_{imax})$, or approximately corresponds thereto.

4. The method according to any one of the preceding claims, **characterized in that** a gradual movement of the object is effected, wherein the object (G) stands still at least while an image is captured, preferably in every lighting situation $(B_1,...,B_{imax})$.

5. The method according to any one of the preceding claims, **characterized in that** the object (G) stands still during an entire sequence of images in all $i_{max}$ lighting situations $(B_1,...,B_{imax})$, and is moved further only subsequently, wherein a further sequence of images is captured in the new position in all $i_{max}$ lighting situations $(B_1,..., Bi$ max).

6. The method according to any one of the preceding claims, **characterized in that** a camera (K), which is configured as line scan camera comprising exactly one line, is used to capture images of the object (G).

7. A device for measuring the optical shape of a moved object (G) for carrying out a method according to any one of claims 1 to 6, comprising

- at least one lighting device (3), which is configured and/or arranged such that it can effect different lighting situations $(B_1,...,B_{imax})$ of the object (G), which is to be captured, and comprising
- at least one capturing device, which is configured and arranged such that it can capture images of the object (G), wherein
- the device (1) has a control device (5), which is configured to specify a movement of the object (G) with the help of a movement device (S), and wherein
- the capturing device has a camera (K), which is configured as line scan camera, which comprises one or several lines,

**characterized in that**

- the lighting device (3) comprises a device, with the help of which a method according to the principle of the photometric stereo or the photometric deflectometry can be carried out, wherein
- the device (1) is arranged to shift the captured images opposite to the direction of movement of the object (G) in the image plane such that congruent images of the object (G) are obtained.

8. The device according to claim 7, **characterized in that** a movement, in particular a speed of the object (G), can be controlled and/or regulated by means of the control device (5).

9. The device according to any one of claims 7 and 8, **characterized in that** the device (1) has the movement device (S), and that a translatory movement and/or a pivoting or rotational movement, respectively, of the object (G) can preferably be effected by means of the movement device (S).

10. The device according to any one of claims 7 to 9, **characterized in that**

a) a movement of the object (G) can be effected at a constant speed by means of the movement device (S), or
b) a gradual movement of the object (G) can be effected by means of the movement device (S), and/or
c) the movement device (S) comprises a stepper motor, linear motor, or a numerically controlled movement device (CNC device).

11. The device according to any one of claims 7 to 10, **characterized in that** the lighting device (3) comprises at least two lamps, which are arranged at different positions such that they can illuminate the object (G) from different directions.

**Revendications**

1. Procédé de détection optique de forme d'un objet (G), comprenant les étapes suivantes :

a) Choix d'un nombre $i_{max}$ de situations d'éclairage $(B_1,...,B_{imax})$,

b) Activation d'une première situation d'éclairage ($B_1$,...,$B_{i\max}$),

c) Éclairage d'un objet (G) avec la situation d'éclairage ($B_1$,...,$B_{i\max}$) activée,

d) Capture d'une image de l'objet (G) dans la situation d'éclairage ($B_1$,...,$B_{i\max}$) activée,

e) Désactivation de la situation d'éclairage ($B_1$,...,$B_{i\max}$) active et activation d'une situation d'éclairage ($B_1$,...,$B_{i\max}$) suivante,

f) Répétition des étapes c) à e) jusqu'à ce que des images de l'objet (G) aient été capturées dans toutes les situations d'éclairage $i_{\max}$ ($B_1$,...,$B_{i\max}$),

- l'objet (G) étant déplacé à l'aide d'un équipement de déplacement (S),
- un équipement de commande (5) du dispositif (1) pour la détection optique de forme définissant un mouvement de l'objet (G) à l'aide de l'équipement de déplacement (S), et
- pour la capture d'images de l'objet (G), une caméra (K) conçue comme caméra linéaire avec une ou plusieurs lignes, étant utilisée,

**caractérisé en ce que**

- pour la détection optique de forme de l'objet (G), un procédé conformément au principe de la stéréo-photométrie ou de la déflectométrie photométrique étant réalisé,
- les images capturées étant déplacées en arrière dans le plan image dans le sens opposé au sens de mouvement de l'objet (G) de façon à ce que des images coïncidentes de l'objet (G) soient obtenues.

2. Procédé selon la revendication 1, **caractérisé en ce qu'**un mouvement en translation et/ou un mouvement pivotant et/ou rotatif de l'objet (G) est réalisé.

3. Procédé selon l'une des revendications précédentes, **caractérisé en ce qu'**une vitesse de l'objet (G) est choisie de manière à être constante et à ce qu'un décalage de l'objet (G) dans des images successives soit égal à un espacement de pixels côté objet d'un équipement de capture préférablement conçu comme caméra (K), divisé par le nombre $i_{\max}$ de situations d'éclairage ($B_1$,...,$B_{i\max}$) ou corresponde approximativement à celui-ci.

4. Procédé selon l'une des revendications précédentes, **caractérisé en ce qu'**un mouvement progressif de l'objet est réalisé, l'objet (G) étant immobilisé au moins pendant la capture d'une image, préférablement dans chaque situation d'éclairage ($B_1$,...,$B_{i\max}$).

5. Procédé selon l'une des revendications précédentes, **caractérisé en ce que** l'objet (G) est immobilisé pendant une séquence complète d'images dans toutes les situations d'éclairage $i_{\max}$ ($B_1$,...,$B_{i\max}$) et est seulement ensuite déplacé, une autre séquence d'images dans toutes les situations d'éclairage $i_{\max}$ ($B_1$,...,$B_{i\max}$) étant capturée dans la nouvelle position.

6. Procédé selon l'une des revendications précédentes, **caractérisé en ce que**, pour la capture d'images de l'objet (G), une caméra (K) conçue comme caméra linéaire avec exactement une ligne, est utilisée.

7. Dispositif pour la détection optique de forme d'un objet (G) déplacé pour l'exécution d'un procédé selon l'une des revendications 1 à 6, avec

- au moins un équipement d'éclairage (3) qui est conçu et/ou disposé de façon à permettre la réalisation de diverses situations d'éclairage ($B_1$,...,$B_{i\max}$) de l'objet (G) à détecter, et avec
- au moins un équipement de capture qui est conçu et disposé de façon à ce permettre la capture d'images de l'objet (G),
- le dispositif (1) présentant un équipement de commande (5) qui est conçu pour définir un mouvement de l'objet (G) à l'aide d'un équipement de déplacement (S), et
- l'équipement de capture présentant une caméra (K) qui est conçue comme caméra linéaire, laquelle comprend une ou plusieurs lignes,

**caractérisé en ce que**

- l'équipement d'éclairage (3) comprend un dispositif, à l'aide duquel un procédé conformément au principe de la stéréo-photométrie ou de la déflectométrie photométrique est réalisable,
- le dispositif (1) étant configuré pour déplacer en arrière les images capturées dans le plan image dans le sens opposé au sens de mouvement de l'objet (G) de façon à ce que des images coïncidentes de l'objet (G) soient obtenues.

8. Dispositif selon la revendication 7, **caractérisé en ce que**, par l'équipement de commande (5), un déplacement, en particulier une vitesse de l'objet (G), est contrôlable et/ou régulable.

9. Dispositif selon l'une des revendications 7 et 8, **caractérisé en ce que** le dispositif (1) présente l'équipement de déplacement (S) et, **en ce que** préférablement par l'équipement de déplacement (S), un mouvement en translation et/ou un mouvement pivotant et/ou rotatif de l'objet (G) est réalisable.

10. Dispositif selon l'une des revendications 7 à 9, **caractérisé en ce que**

a) par l'équipement de déplacement (S), un mouvement de l'objet (G) à vitesse constante est réalisable, ou

b) par l'équipement de déplacement (S), un mouvement progressif de l'objet (G) est réalisable, et/ou

c) l'équipement de déplacement (S) comprend un moteur pas-à-pas, un moteur linéaire ou un équipement de déplacement à commande numérique (installation CNC).

11. Dispositif selon l'une des revendications 7 à 10, **caractérisé en ce que** l'équipement d'éclairage (3) comprend au moins deux lampes qui sont disposées à diverses positions de manière à permettre un éclairage de l'objet (G) depuis différentes directions.

Fig. 1

Fig. 2

Fig. 3

$E_1(x,y), E_2(x,y), \ldots, E_i(x,y), \ldots, E_{imax}(x,y)$

K

S

Z

z

O

x

A

F

G

Fig. 4A

y

S

Z

A

x

F

G

Fig. 4B

$E_1(x,y), E_2(x,y), \ldots, E_i(x,y), \ldots, E_{imax}(x,y)$

K

1

O

z

Z

x

G

Fig. 5A

y

1

Z

x

G

Fig. 5B

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2004051186 A1
- DE 102005013614 A1
- DE 19739250 A1
- EP 1567827 A1
- EP 1864081 A1
- WO 2006100077 A1
- DE 102008022292 A1
- EP 1949673 A1
- WO 2007054332 A1